# EUROPÄISCHE PATENTSCHRIFT

(11) **EP 2 296 969 B1**
(45) Veröffentlichungstag und Bekanntmachung des Hinweises auf die Patenterteilung: **13.03.2013**
(21) Anmeldenummer: 09765613.6
(22) Anmeldetag: 17.06.2009
(51) Int. Cl.: G01M 3/28, B64D 13/00, B64D 15/02

(54) **LUFTFAHRZEUGLEITUNGSÜBERWACHUNGSSYSTEM UND -VERFAHREN**
AIRCRAFT CONDUIT MONITORING SYSTEM AND METHOD
SYSTÈME ET PROCÉDÉ DE SURVEILLANCE DE CONDUIT DANS UN AÉRONEF

(30) Priorität: 20.06.2008 DE 102008029469; 20.06.2008 US 74185
(43) Veröffentlichungstag der Anmeldung: 23.03.2011
(73) Patentinhaber: Airbus Operations GmbH, 21129 Hamburg (DE)
(72) Erfinder: KELNHOFER, Jürgen, 21635 Jork (DE); KRAKOWSKI, Dariusz, 21614 Buxtehude (DE)
(74) Vertreter: Schicker, Silvia
(86) Internationale Anmeldenummer: PCT/EP2009/004368
(87) Internationale Veröffentlichungsnummer: WO 2009/153033

(56) Entgegenhaltungen:
- WO-A1-2005/015326
- GB-A- 2 443 964
- US-A- 5 272 646

## Beschreibung

Die Erfindung betrifft ein Luftfahrzeugleitungsüberwachungssystem und -verfahren, insbesondere für ein Luftfahrzeugflügelenteisungssystem und eine Luftfahrzeugklimaanlage. Ein wesentlicher Stand der Technik ist durch WO 2005/015326 gegeben.

Flugzeuge weisen ein Enteisungssystem auf, das während des Fluges heiße Zapfluft von einem Triebwerk zu einem Flügel, insbesondere den Flügelvorderkanten, leitet. Dadurch wird während des Fluges der Flügel bei einer Temperatur gehalten, bei der sicherstellt ist, dass sich kein Eis am Flügel bildet. Wie allgemein bekannt ist, kann Eis an einem Flügel zu einem Absturz des Flugzeuges führen. Der Einsatz dieses Enteisungssystems ist insbesondere beim Sinkflug wichtig. Fliegt das Flugzeug in großer Höhe, beispielsweise 10.000 Meter, weist die Luft relativ wenig Feuchtigkeit auf, jedoch ist sie sehr kalt. Dadurch wird auch der Flügel des Flugzeuges auf eine niedrige Temperatur abgekühlt. Während des Sinkfluges kann das Flugzeug in feuchtere Luftschichten eintreten. Da der Flügel des Luftfahrzeuges immer noch eine Temperatur deutlich unter 0°C aufweist, kann sich beim Sinkflug unterhalb einer Höhe von etwa 7.300 Metern (etwa 22.000 Fuß) Eis am Flügel bilden, was zu einem Absturz führen kann. Wie eingangs erwähnt, hat die zu den Flügelvorderkanten geleitete heiße Luft die Aufgabe, den Flügel des Flugzeuges so zu erwärmen, dass auch während des Sinkflugs kein Eis am Flügel entstehen kann.

Eine undichte Heißluftleitung in einem Flügel kann dazu führen, dass der Flügel nicht vollständig enteist wird. Ferner tritt heiße Luft in das Flügelinnere ein, was Bauteile im Flügel beschädigen kann und die strukturelle Integrität des Flügels beeinträchtigen kann.

Heiße Luft mit einer Temperatur von etwa 200°C und höher kann die Festigkeit eines aus einem Metall hergestellten Flügels des Standes der Technik reduzieren. Es ist geplant, die Flügel zukünftiger Flugzeuggenerationen aus einem Verbundmaterial aufzubauen, um deren Gewicht zu reduzieren. Ein verwendetes Verbundmaterial ist glasfaserverstärkter Kunststoff (GFK), dessen strukturelle Integrität bei bereits ca. 85°C abnimmt. Es muss folglich verhindert werden, dass Triebwerkszapfluft mit einer Temperatur von etwa 200°C in einen aus einem Verbundmaterial hergestellten Flügel eintritt. Bei einem aus einem Verbundmaterial hergestellten Flügel kann das Eintreten heißer Luft in den Flügel stärkere Auswirkungen auf die strukturelle Integrität des Flügels nach sich ziehen.

Um sicherzustellen, dass die Flügel zuverlässig enteist werden, werden in der Leitung ein Drucksensor, der den statischen Druck in der Leitung erfasst, und ein Durchflusssensor vorgesehen, der den Luftvolumenstrom erfasst. Optional kann ein Temperatursensor vorgesehen sein, der die Temperatur der durch die Leitung strömenden Luft erfasst. Sind die Temperatur und der Luftvolumenstrom bekannt, kann daraus der Luftmassenstrom bestimmt werden.

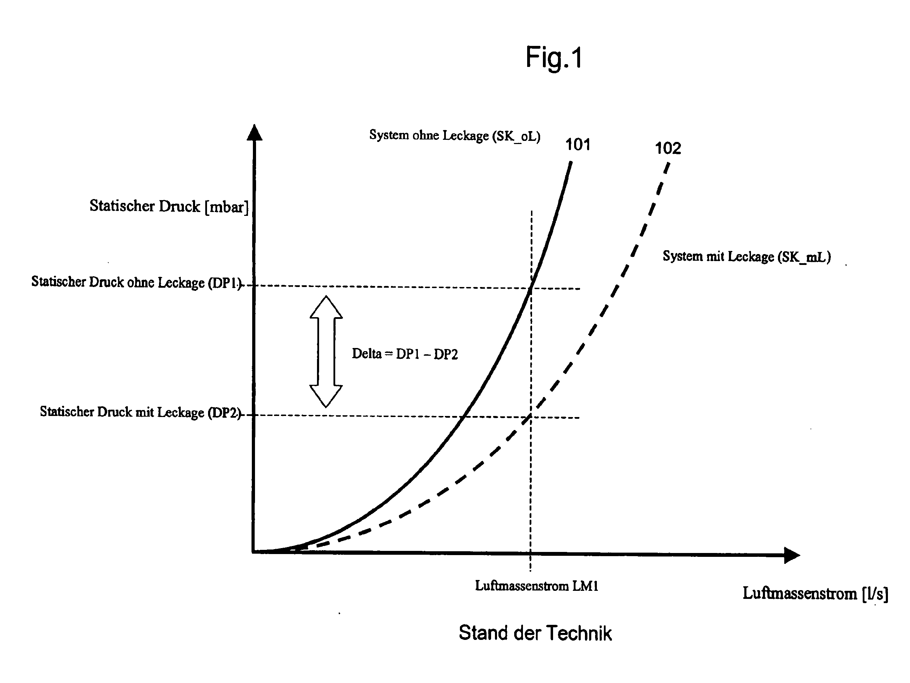

Die Figur 1 zeigt eine erste Kennlinie 101 des Luftmassenstroms über den statischen Druck in der Leitung, falls keine Leckage vorliegt. Die Kennlinie 102 zeigt den statischen Druck über den Luftmassenstrom, falls eine Leckage vorhanden ist. Durch die Leckage ergibt sich eine neue Charakteristik von Luftmassenstrom zu statischem Druck. Es kann sich ein geringerer statischer Druck bei gleichbleibendem Luftmassenstrom oder ein höherer Luftmassenstrom bei gleichbleibendem statischen Druck einstellen. Es ist jedoch auch möglich, dass sich beide Größen ändern. Es kann der Luftvolumenstrom gemessen werden und mit Hilfe der Lufttemperatur der Luftmassenstrom berechnet werden.

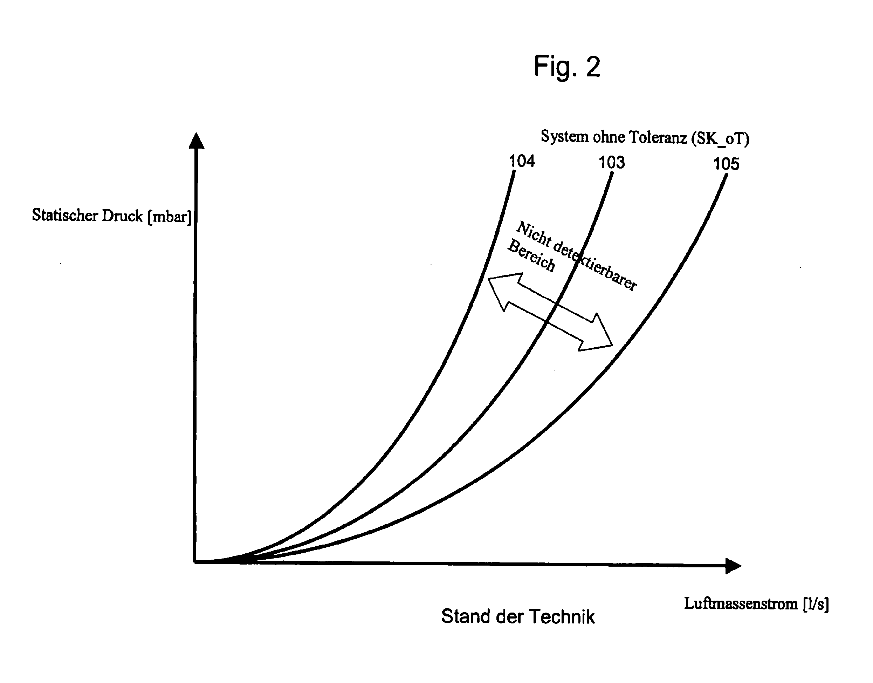

Die Kennlinie zwischen Luftmassenstrom und statischem Druck unterliegt Schwankungen aufgrund von Exemplarstreuungen des Leitungssystems in der Höhe von etwa ± 5% und mehr. Beispielsweise können Montagetoleranzen bei Biegungen und Abzweigungen die Kennlinie von Luftmassenstrom und statischem Druck beeinflussen. Falls keine Toleranz zugrundegelegt wird, hat das System die in Figur 2 gezeigte Kennlinie 103. Falls der maximale Fehler in eine erste Richtung zugrundegelegt wird, hat das System die Kennlinie 104 und falls der maximale Fehler in eine zweite, entgegengesetzte Richtung zugrundegelegt wird, hat das System die Kennlinie 105. Bewegt sich ein Punkt oder eine Kennlinie innerhalb des durch die Kennlinien 104 und 105 beschränkten Bereichs, kann eine Leckage nicht erkannt werden.

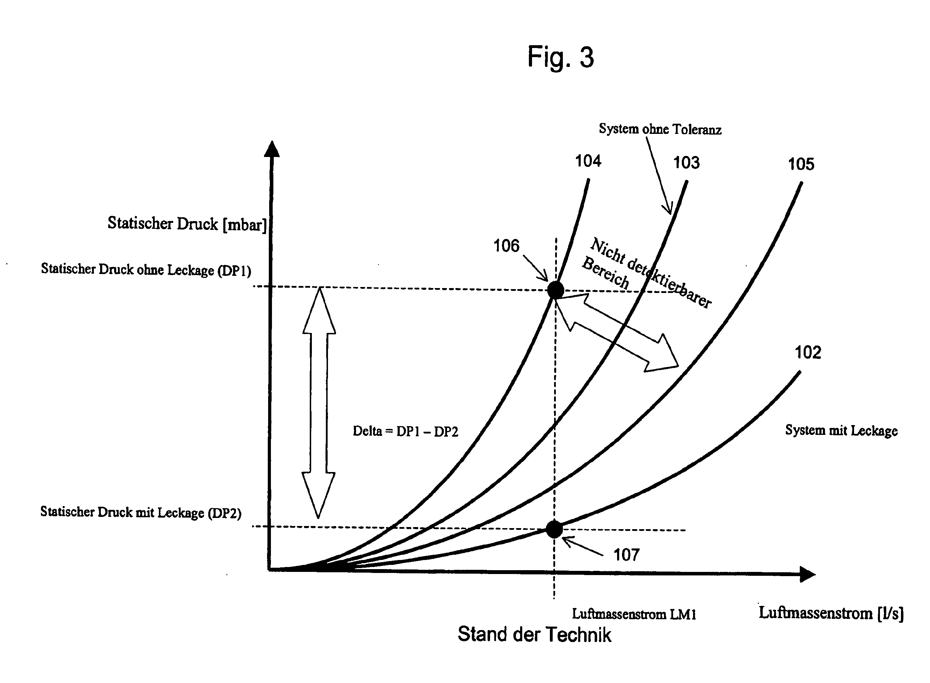

Figur 3 zeigt die Kennlinie 103, bei der keine Toleranz zugrundegelegt wird. Die Kennlinie 104 zeigt den Fall, bei dem eine maximale Toleranz in eine erste Richtung zugrundegelegt wird, und die Kennlinie 105 zeigt den Fall, bei dem eine maximale Toleranz in eine zweite, entgegengesetzte Richtung zugrundegelegt wird. Bewegt sich ein Punkt von der Kennlinie 103 zwischen dem von den Kennlinien 104 und 105 beschränkten Bereich, so ist eine Leckage nicht detektierbar. Im Beispiel der Figur 3 zeigt die Kennlinie 102 eine Leitung mit einer Leckage. Da sich die Kennlinie 102 außerhalb des von den Kennlinien 104 und 105 begrenzten Bereichs befindet, kann diese Leckage detektiert werden. Die Leckage muss also ein relativ großes Ausmaß aufweisen, damit sie detektiert werden kann. In dem in der Figur 3 gezeigten Beispiel befindet sich der Arbeitspunkt 106 des Systems auf der Kennlinie 104, da alle Bauteile des Systems die maximale Toleranz in die erste Richtung aufweisen. Im Falle einer Leckage verschiebt sich das Verhältnis von Luftmassenstrom zu statischem Druck zum Punkt 107. Man erkennt, dass sich der statische Druck um einen hohen Wert ändern muss, damit die Leckage erkannt werden kann. Dies führt unter Umständen dazu, dass eine kleine Leckage nicht erkannt werden kann, die aber trotzdem zu den eingangs erwähnten Strukturproblemen bei Flügeln aus einem Verbundmaterial aber auch bei einem Flügel des Standes der Technik aus Metall führen kann.

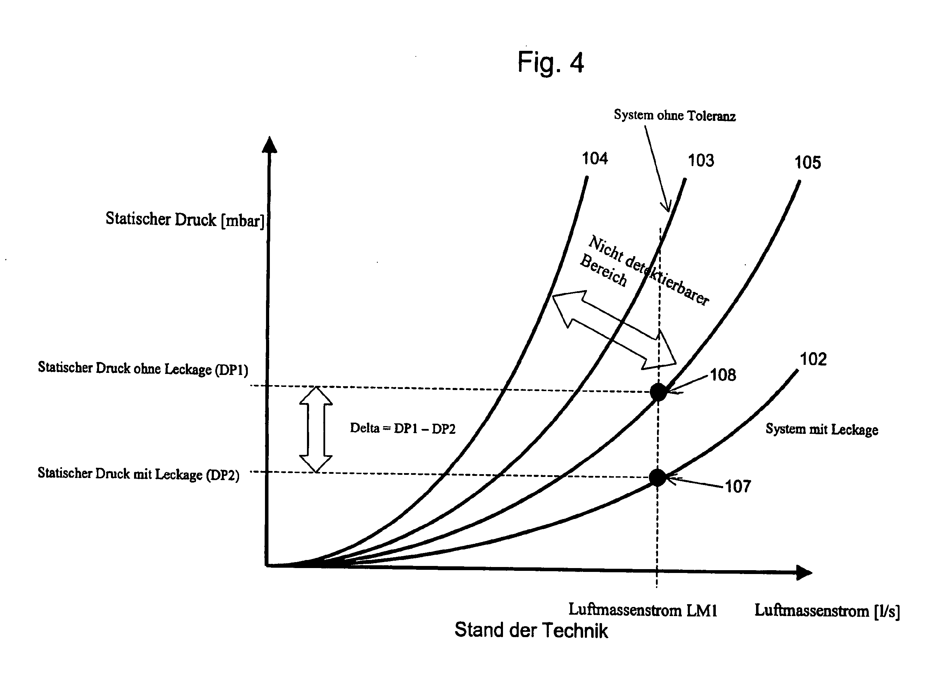

In Figur 4 ist der Fall dargestellt, bei dem alle Bauteile des Systems eine maximale Toleranz in die zweite, entgegengesetzte Richtung aufweisen. Somit befindet sich der Arbeitspunkt 108 des Systems im Normalbetrieb auf der Kennlinie 105. Im Fall einer Leckage befindet sich der Arbeitspunkt 107 auf der Kennlinie 102. Schon bei einer geringen Änderung des statischen Drucks vom Wert DP1 zum Wert DP2 detektiert das System eine Leckage. Somit ist es möglich, dass eine geringe Druckänderung als Leckage interpretiert wird.

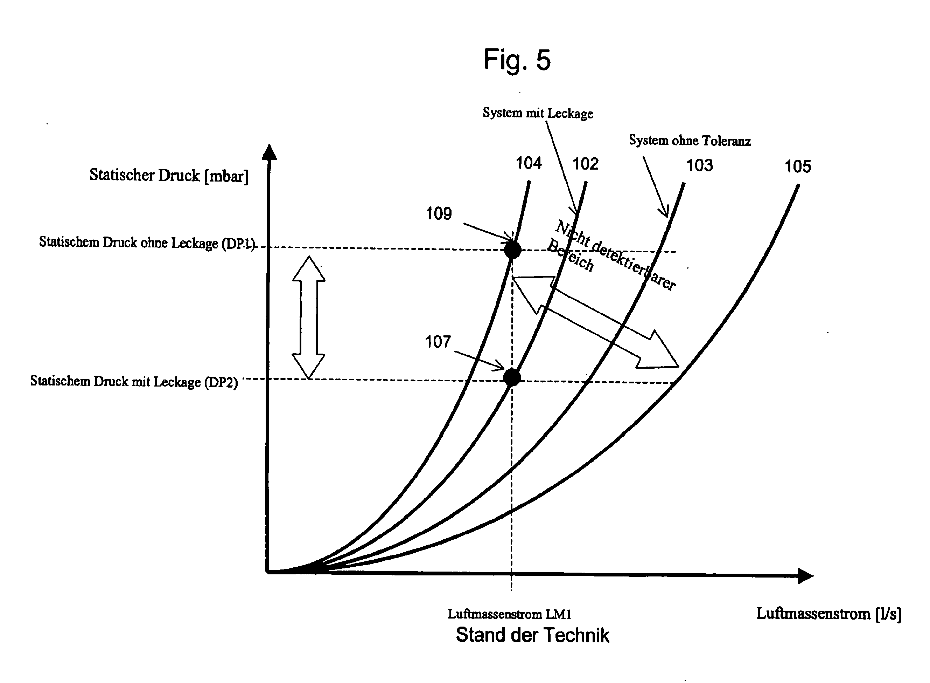

In Figur 5 zeigt die Kennlinie 103 das Verhältnis von Luftmassenstrom zu statischem Druck, falls keine Toleranzen zugrundegelegt werden. Die Kennlinie 104 stellt den Fall dar, bei dem alle Bauteile des Systems eine Toleranz in der ersten Richtung aufweisen, und die Kennlinie 105 stellt den Fall dar, bei dem alle Bauteile des Systems eine Toleranz in die zweite, entgegengesetzte Richtung aufweisen. Bei dem in Figur 5 dargestellten Fall liegt der Arbeitspunkt 109 des Systems auf der Kennlinie 104. Alle Bauteile des Systems weisen also eine Toleranz in die erste Richtung auf. Im Fall einer Leckage ergibt sich bei dem in Figur 5 dargestellten Fall der Arbeitspunkt 107 auf der Kennlinie 102. Dieser liegt innerhalb des nicht detektierbaren Bereichs zwischen den Kennlinien 104 und 105, wie zuvor beschrieben wurde. Somit kann das System des Standes der Technik eine relativ große Änderung des statischen Drucks nicht erkennen. Daher können sich Probleme mit der strukturellen Integrität des Flügels ergeben, da heiße Luft in den Flügel eintreten kann, ohne dass dies von einem System des Standes der Technik erkannt werden kann.

Die zuvor geschilderten Probleme können umgangen werden, indem mehr Sensoren eingebaut werden. Dies führt jedoch zu einer unerwünschten Gewichtszunahme, einer erhöhen Komplexität, einem erhöhten Wartungsaufwand und somit zu zusätzlichen Kosten.

Es ist eine Aufgabe der Erfindung, ein Luftfahrzeugleitungsüberwachungssystem bereitzustellen, das auch bei relativ großen Leitungsbauteiltoleranzen Leckagen oder andere Störungen erkennen kann.

Die Aufgabe der Erfindung wird durch ein Luftfahrzeugleitungsüberwachungssystem mit einer in einem Luftfahrzeug einbaubaren Leitung gelöst, die Gas von einer Quelle zu einem Einsatzort leitet. In der Leitung ist eine Durchflusserfassungseinrichtung angeordnet, die einen Gasmassenstrom in der Leitung erfasst. Eine Druckerfassungseinrichtung erfasst einen statischen Druck in der Leitung. Eine Steuerungseinrichtung ist dazu ausgebildet, in einem Lernbetrieb zumindest einen Lernbetrieb-Ist-Gasmassenstrom zu erfassen und den Lernbetrieb-Ist-Gasmassenstrom als Soll-Gasmassenstrom für einen Normalbetrieb abzuspeichern. Die Steuerungseinrichtung ist ferner dazu ausgebildet, einen Lernbetrieb-Ist-Druck zu erfassen und als Soll-Druck für den Normalbetrieb zu speichern. Im Lernbetrieb des erfindungsgemäßen Luftfahrzeugleitungsüberwachungssystem ist ein Leck in der zu überwachenden Leitung ausgeschlossen, so dass die im Lernbetrieb erfassten Werte des Lernbetrieb-Ist-Gasmassenstroms und des Lernbetrieb-Ist-Drucks Gasmassenstrom- und Druckwerten in einer Leitung ohne Leck entsprechen. Im Normalbetrieb, das heißt, einem Betriebszustand, in dem anders als im Lernbetrieb, Leckagen in der zu überwachenden Leitung nicht mehr ausgeschlossen sind, vergleicht die Steuerungseinrichtung einen Normalbetrieb-Ist-Gasmassenstrom mit dem Soll-Gasmassenstrom und/oder einen Normalbetrieb-Ist-Druck mit dem Soll-Druck. Falls der Normalbetrieb-Ist-Gasmassenstrom um mehr als einen Schwellenwert vom Soll-Gasmassenstrom abweicht und/oder falls der Normalbetrieb-Ist-Druck um mehr als einen Schwellenwert vom Soll-Druck abweicht, wird ein Signal ausgegeben, das eine Abweichung anzeigt. Der Ausdruck Gas umfasst auch ein Gasgemisch, beispielsweise Luft, und jedes gasförmige Fluid.

Der Einsatzort kann ein Luftaustritt an einer Tragfläche oder eine Düse in einer Passagierkabine sein. Wie eingangs erwähnt, beeinträchtigen beispielsweise Bögen in der Leitung, Abzweigungen und sonstige Montagetoleranzen die Charakteristik zwischen Luftmassenstrom und statischem Druck. Die Empfindlichkeit des Luftfahrzeugleitungsüberwachungssystems wird durch diese Toleranzen nicht beeinträchtigt, da der Einfluss dieser Toleranzen im Lernbetrieb der Steuerungseinrichtung berücksichtigt wird. Das Luftfahrzeugleitungsüberwachungssystem hat auch den Vorteil, dass statische Toleranzen der Durchflusserfassungseinrichtung, der Druckerfassungseinrichtung und des Temperatursensors nicht die Empfindlichkeit des Systems einschränken. Das zuvor beschriebene Luftfahrzeugleitungsüberwachungssystem eignet sich insbesondere für Anwendungsfälle, bei denen lediglich ein Arbeitspunkt aus Luftmassenstrom und statischem Druck im Normalbetrieb verwendet wird.

Das Luftfahrzeugleitungsüberwachungssystem erfasst im Lernbetrieb eine Mehrzahl von Lernbetrieb-Ist-Gasmassenstromwerten bei jeweils unterschiedlichen Lernbetrieb-Ist-Drücken. Die Steuerungseinrichtung ordnet jeden Lernbetrieb-Ist-Gasmassenstrom einem Lernbetrieb-Ist-Druck zu. Jeder Lernbetrieb-Ist-Gasmassenstrom wird als Soll-Gasmassenstrom und jeder Lernbetrieb-Ist-Druck wird als Soll-Druck für einen Normalbetrieb abgespeichert. Die Steuerungseinrichtung speichert auch eine Zuordnung zwischen dem jeweiligen Soll-Druck und dem jeweiligen Soll-Volumenstrom ab. Im Normalbetrieb erhält die Steuerungseinrichtung einen Normalbetrieb-Ist-Gasmassenstromwert von der Durchflusserfassungseinrichtung und einen Normalbetrieb-Ist-Druckwert von der Druckerfassungseinrichtung. Es wird der dem Normalbetrieb-Ist-Druck zugeordnete Soll-Gasmassenstrom mit dem Normalbetrieb-Ist-Gasmassenstrom verglichen. Falls der Normalbetrieb-Ist-Gasmassenstrom um mehr als einen Schwellenwert vom Soll-Gasmassenstrom abweicht, gibt die Steuerungseinrichtung ein Signal aus, das eine Abweichung anzeigt. Die Steuerungseinrichtung kann alternativ oder zusätzlich im Normalbetrieb einen Normalbetrieb-Ist-Gasmassenstrom von der Durchflusserfassungseinrichtung erhalten und einen Normalbetrieb-Ist-Druck von der Druckerfassungseinrichtung erhalten. Der dem Normalbetrieb-Ist-Gasmassenstrom zugeordnete Soll-Druck wird mit dem Normalbetrieb-Ist-Druck verglichen. Falls der Normalbetrieb-Ist-Druck um mehr als einen Schwellenwert vom Soll-Druck abweicht, gibt die Steuerungseinrichtung ein Signal aus, das eine Abweichung anzeigt. Es versteht sich, dass die Steuerungseinrichtung ein Signal ausgeben kann, das eine Abweichung anzeigt und/oder ein Signal oder einen Wert ausgeben kann, der die Größe der Abweichung anzeigt.

Bei diesem Luftfahrzeugleitungsüberwachungssystem wird eine Mehrzahl von Punkten auf der Kennlinie von Gasmassenstrom zu statischem Druck in der Leitung aufgenommen. Dieses System ist für einen Anwendungsfall geeignet, bei dem im Betrieb die Werte des Gasmassenstroms und/oder des statischen Drucks je nach Betriebsart variiert werden. Es können beliebig viele Punkte auf der Kennlinie aufgenommen werden. Ferner kann die Steuerungseinrichtung zwischen den aufgenommenen Punkten interpolieren. Diese Interpolation kann während des Lernbetriebes oder während des Normalbetriebes erfolgen. Durch die Interpolation bleibt, abgesehen von numerischen Ungenauigkeiten, je nach verwendetem Interpolationsverfahren die Zuordnung zwischen Soll-Druck und Soll-Volumenstrom erhalten.

Die Durchflusserfassungseinrichtung kann eine Venturidüse umfassen und eine Differenz zwischen einem stromaufwärts der Venturidüse vorherrschenden Druck und einem stromabwärts der Venturidüse vorherrschenden Druck als ein Maß des Gasvolumenstroms bereitstellen.

Die Durchflusserfassungseinrichtung kann auch ein sogenanntes Hitzdrahtaneomometer sein. Ein Hitzdrahtaneomometer weist einen temperaturabhängigen elektrischen Widerstand auf, der elektrisch beheizt wird. Der elektrische Leiter wird in Abhängigkeit von der Strömungsgeschwindigkeit gekühlt. Die Temperatur des elektrischen Widerstandes kann mittels einer Widerstandsmessung bestimmt werden, wodurch auf die Strömungsgeschwindigkeit geschlossen werden kann.

Falls die Durchflusserfassungseinrichtung lediglich einen Gasvolumenstrom erfassen kann, kann ein Temperatursensor in der Leitung oder in der Durchflusserfassungseinrichtung vorgesehen sein. Der Gasvolumenstrom entspricht dem Quotient aus dem Gasmassenstrom und der Dichte des Gases oder Gasgemisches. Die Dichte des Gases oder Gasgemisches hängt von der Temperatur ab.

Aufgrund des zuvor beschriebenen physikalischen Zusammenhangs zwischen dem Gasmassenstrom und dem Gasvolumenstrom kann ein Gasmassenstromwert durch einen Gasvolumenstromwert ausgetauscht werden. Die Durchflusserfassungseinrichtung kann einen Gasvolumenstrom erfassen und die Steuerungseinrichtung kann statt eines Gasmassenstromwerts einen Gasvolumenstromwert verarbeiten. Es ist auch denkbar, dass die Durchflusserfassungseinrichtung einen Gasvolumenstrom erfasst und die Steuerungseinrichtung mittels eines Temperaturwerts einen Gasmassenstromwert berechnet. Die Durchflusserfassungseinrichtung kann den Gasvolumenstrom erfassen und mittels einer erfassten Temperatur den Gasmassenstrom bestimmen und ausgeben.

Ein erfindungsgemäßes Luftfahrzeugflügelenteisungssystem umfasst das zuvor beschriebene Luftfahrzeugleitungsüberwachungssystem. Der Einsatzort, an den die Leitung des Luftfahrzeugleitungsüberwachungssystems das die Leitung durchströmende Gas leitet, umfasst zumindest einen Gasaustritt in einem Luftfahrzeugflügel. Der Luftfahrzeugflügel kann eine Tragfläche eines herkömmlichen Flugzeuges oder ein sich gegenüber dem Luftfahrzeug bewegender Flügel in Form eines Rotorflügels eines Helikopters sein.

Eine erfindungsgemäße Luftfahrzeugklimaanlage umfasst das zuvor beschriebene Luftfahrzeugleitungsüberwachungssystem. Der Einsatzort, an den die Leitung des Luftfahrzeugleitungsüberwachungssystems das die Leitung durchströmende Gas leitet, ist beispielsweise zumindest eine Düse, die der Kabine Luft zuführt.

Die Erfindung betrifft auch ein Verfahren zum Überwachen eines Gasmassenstroms in einer in einem Luftfahrzeug eingebauten Leitung von einer Gasquelle zu einem Einsatzort mit einem Lernbetrieb und einem Normalbetrieb. Im Lernbetrieb wird ein Lernbetrieb-Ist-Gasmassenstrom bestimmt, ein Lernbetrieb-Ist-Druck bestimmt und der Lernbetrieb-Ist-Gasmassenstrom als Soll-Gasmassenstrom und der Lernbetrieb-Ist-Druck als Soll-Druck abgespeichert. Im Normalbetrieb wird ein Normalbetrieb-Ist-Gasmassenstrom bestimmt, ein Normalbetrieb-Ist-Druck bestimmt, der Normalbetrieb-Ist-Gasmassenstrom mit dem Soll-Massenstrom und/oder der Normalbetrieb-Ist-Druck mit dem Soll-Druck verglichen und ein Warnsignal ausgegeben, falls der Normalbetrieb-Ist-Gasmassenstrom vom Soll-Gasmassenstrom um mehr als einen Schwellenwert abweicht und/oder der Normalbetrieb-Ist-Druck vom Soll-Druck um mehr als einen Schwellenwert abweicht.

Das Verfahren erfasst im Lernbetrieb eine Mehrzahl von Lernbetrieb-Ist-Gasmassenstromwerten bei jeweils unterschiedlichen Lernbetrieb-Ist-Drücken. Jeder Lernbetrieb-Ist-Gasmassenstrom wird dem jeweiligen Lernbetrieb-Ist-Druck zugeordnet. Jeder Lernbetrieb-Ist-Gasmassenstrom wird als Soll-Gasmassenstrom abgespeichert, jeder Lernbetrieb-Ist-Druck wird als Soll-Druck abgespeichert und ferner wird eine Zuordnung zwischen dem jeweiligen Soll-Druck und dem jeweiligen Soll-Gasmassenstrom abgespeichert.

Im Normalbetrieb führt das Verfahren das Erfassen des Normalbetrieb-Gasmassenstroms und das Erfassen des Normalbetrieb-Ist-Drucks aus. Anschließend wird der dem Normalbetrieb-Ist-Druck zugeordnete Soll-Gasmassenstrom mit dem Normalbetrieb-Ist-Gasmassenstrom verglichen und/oder der dem Normalbetrieb-Ist-Gasmassenstrom zugeordnete Soll-Druck mit dem Normalbetrieb-Ist-Druck verglichen. Es wird ein Warnsignal ausgegeben, falls der Normalbetrieb-Ist-Gasmassenstrom vom jeweiligen Soll-Gasmassenstrom oder der Normalbetrieb-Ist-Druck vom jeweiligen Soll-Druck um mehr als einen Schwellenwert abweicht. Das Verfahren kann zwischen zumindest zwei Soll-Druckwerten und/oder zumindest zwei Soll-Gasmassenstromwerten interpolieren.

Das Verfahren kann zumindest teilweise durch die zuvor beschriebene Steuerungseinrichtung gesteuert werden. Die Steuerungseinrichtung kann durch einen Computer mit einem Speicher implementiert werden. Es versteht sich, dass die Steuerungseinrichtung auch durch eine Mehrzahl separater Einrichtungen ausgebildet werden kann, die einen oder mehrere Schritte des zuvor beschriebenen Verfahrens implementieren. Beispielsweise kann die Steuerungseinrichtung eine Speichereinrichtung, eine Vergleichseinrichtung, eine Ausgabeeinrichtung, eine Interpolationseinrichtung und dergleichen umfassen.

Bei dem erfindungsgemäßen Verfahren kann statt eines Gasmassenstromwerts ein Gasvolumenstromwert erfasst und verarbeitet werden. Dabei können die zuvor beschriebenen physikalischen Zusammenhänge verwendet werden.

Das Verfahren kann zum Detektieren einer Störung der Luftzufuhr beim Enteisen eines Luftfahrzeugflügels verwendet werden. Der Einsatzort, an den die Leitung des Luftfahrzeugleitungsüberwachungssystems das die Leitung durchströmende Gas leitet, umfasst dann zumindest einen Gasaustritt im Luftfahrzeugflügel. Das Verfahren kann zum Überwachen der Luftzufuhr beim Klimatisieren der Luftfahrzeugkabine verwendet werden. Bei diesem Verfahren bildet beispielsweise zumindest eine Luftaustrittsdüse in der Kabine den Einsatzort, an den die Leitung des Luftfahrzeugleitungsüberwachungssystems das die Leitung durchströmende Gas leitet.

Die Erfindung wird im Folgenden unter Bezugnahme auf die nachfolgenden Figuren detaillierter beschrieben. Es zeigen:
- Figur 1: eine Kennlinie des statischen Drucks über den Luftmassenstrom, falls eine Leitung keine Leckage aufweist, und eine weitere Kennlinie des statischen Drucks über den Luftmassenstrom, falls die Leitung eine Leckage aufweist, bei einem System des Standes der Technik,
- Figur 2: einen Bereich, in dem bei einem System des Standes der Technik aufgrund von Toleranzen keine Leckage erkannt werden kann,
- Figuren 3, 4 und 5: verschiedene Probleme, die beim Erkennen von Leckagen auftreten können,
- Figur 6: ein Luftleitungssystem mit dem erfindungsgemäßen Luftfahrzeugleitungsüberwachungssystem und
- Figur 7: eine Kennlinie des statischen Drucks über den Luftmassenstrom und einen Bereich, in dem keine Leckagedetektion möglich ist, bei einem erfindungsgemäßen Luftfahrzeugleitungsüberwachungssystem.

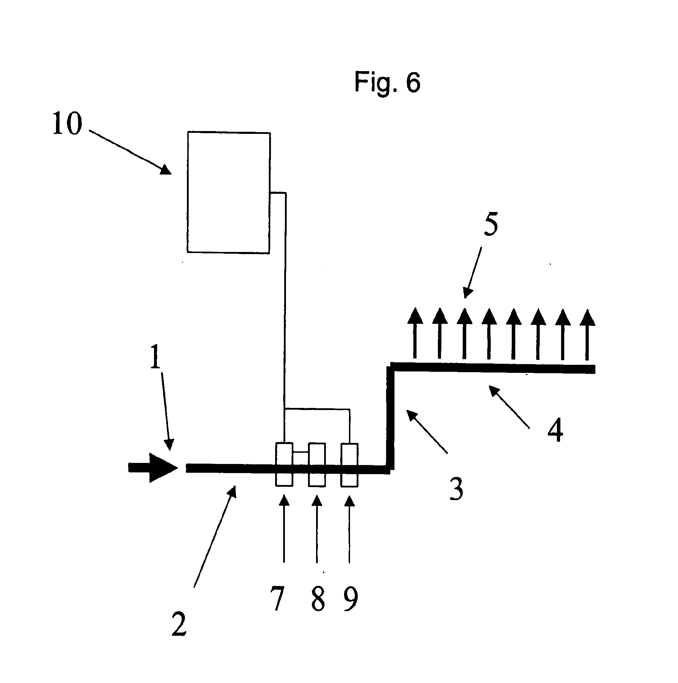

Figur 6 zeigt ein Luftleitungssystem, das eine erste Leitung 2, eine zweite Leitung 3 und eine dritte Leitung umfasst, die hintereinander angeordnet sind. In die erste Leitung 2 wird ein Luftstrom 1 eingespeist. Der Luftstrom 1 kann heiße Triebwerkszapfluft sein. Die dritte Leitung 4 weist Öffnungen 5 auf, durch die die Luft aus der Leitung austritt. Die Öffnungen 5 können sich quer zur Richtung des Luftstroms und/oder in der gleichen Richtung wie der Luftstrom befinden. Es kann auch nur eine Öffnung vorgesehen sein. Die Öffnungen 5 können sich beispielsweise in einem Flügel eines Luftfahrzeuges befinden, um den Flügel zu enteisen.

Es ist auch möglich, dass der Luftstrom 1 von einer Klimaanlage zugeführt wird und sich die Öffnungen 5 in einer Kabine eines Luftfahrzeuges befinden.

In der ersten Leitung 2 befindet sich eine Durchflusserfassungseinrichtung 7, ein optionaler Temperatursensor 8 und eine Druckerfassungseinrichtung 9. Der optionale Temperatursensor 8 ist mit der Durchflusserfassungseinrichtung 7 gekoppelt. Die Durchflusserfassungseinrichtung 7 und die Druckerfassungseinrichtung 9 sind mit einer Steuerungseinrichtung 10 gekoppelt. Es ist auch möglich, dass der optionale Temperatursensor 8 nicht mit der Durchflusserfassungseinrichtung 7, sondern mit der Steuerungseinrichtung 10 gekoppelt ist.

Die Durchflusserfassungseinrichtung 7 kann eine Venturidüse umfassen und eine Druckdifferenz stromaufwärts und stromabwärts der Venturidüse als ein Maß des Gasvolumenstroms bereitstellen.

Die Durchflusserfassungseinrichtung 7 kann auch ein sogenanntes Hitzdrahtaneomometer sein. Ein Hitzdrahtaneomometer weist einen temperaturabhängigen elektrischen Widerstand auf, der elektrisch beheizt wird. Der elektrische Leiter wird in Abhängigkeit von der Strömungsgeschwindigkeit gekühlt. Die Temperatur des elektrischen Widerstandes kann mittels einer Widerstandsmessung bestimmt werden, wodurch auf die Strömungsgeschwindigkeit geschlossen werden kann.

Der Luftvolumenstrom ist der Quotient aus dem Luftmassenstrom und der Dichte von Luft. Die Dichte von Luft hängt von der Temperatur ab. Somit kann aus einem erfassten Luftvolumenstrom und einer Temperatur der Luftmassenstrom berechnet werden.

Die Durchflusserfassungseinrichtung 7 und der Temperatursensor 8 stellen einen IstWert des Luftmassenstroms bereit. Die Druckerfassungseinrichtung 9 stellt einen IstWert des statischen Drucks in der ersten Leitung bereit.

In einem Lernbetrieb werden ein Lernbetrieb-Ist-Gasmassenstrom und ein Lernbetrieb-Ist-Druck erfasst. Im Lernbetrieb ist sichergestellt, dass in der Leitung 2, 3, 4 keine Leckage vorhanden ist. Die Steuerungseinrichtung 10 speichert den Lernbetrieb-Ist-Luftmassenstrom als Soll-Luftmassenstrom und den Lernbetrieb-Ist-Druck als Soll-Druck.

Im Normalbetrieb wird der Normalbetrieb-Ist-Luftmassenstrom und der Normalbetrieb-Ist-Druck bestimmt. Der Normalbetrieb-Ist-Luftmassenstrom wird mit dem Soll-Luftmassenstrom und/oder der Normalbetrieb-Ist-Druck wird mit dem Soll-Druck durch die Steuerungseinrichtung verglichen. Es wird ein Warnsignal ausgegeben, falls der Normalbetrieb-Ist-Luftmassenstrom vom Soll-Luftmassenstrom um mehr als einen Schwellenwert abweicht oder der Normalbetrieb-Ist-Druck vom Soll-Druck um mehr als einen Schwellenwert abweicht.

Diese Vorgehensweise ist geeignet, falls das Luftleitungssystem nur bei einem Soll-Druck oder Soll-Luftmassenstrom betrieben wird. Dies kann bei einem Enteisungssystem für einen Flügel eines Luftfahrzeuges der Fall sein.

Im Lernbetrieb kann auch eine Mehrzahl von Lernbetrieb-Ist-Luftmassenstromwerten bei jeweils unterschiedlichen Lernbetrieb-Ist-Drücken bestimmt werden. Jeder Lernbetrieb-Ist-Luftmassenstrom wird dem jeweiligen Lernbetrieb-Ist-Druck zugeordnet. Die Steuerungseinrichtung 10 speichert jeden Lernbetrieb-Ist-Luftmassenstromwert als Soll-Luftmassenstromwert, jeden Lernbetrieb-Ist-Druckwert als Soll-Druckwert und eine Zuordnung zwischen dem jeweiligen Soll-Druck oder dem jeweiligen Soll-Luftmassenstrom ab. Die Zuordnung kann durch paarweises Abspeichern, durch Abspeichern in einer Tabelle, durch Zeiger und dergleichen erreicht werden.

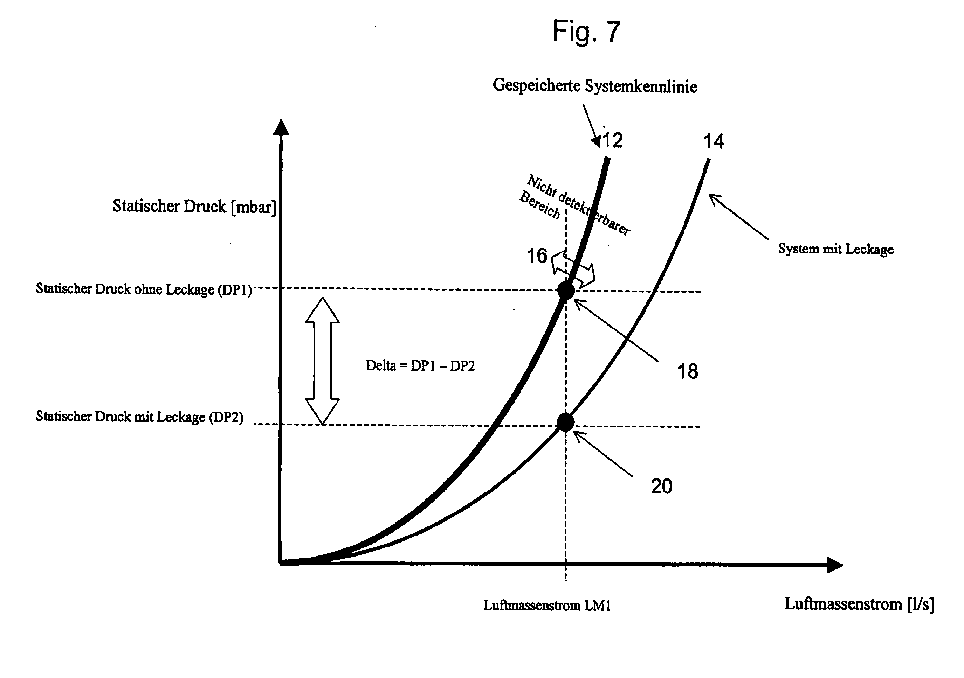

Dabei wird die in Figur 7 mit dem Bezugszeichen 12 bezeichnete Systemkennlinie des statischen Drucks in Abhängigkeit des Luftmassenstroms erzeugt. Die Systemkennlinie 12 berücksichtigt Einflüsse von Leitungsbiegungen, Leitungsverzweigungen, eines Leitungsdurchmessers sowie deren Streuung. Diese Kennlinie erfasst auch die statischen Messfehler der Messwerte aufnehmenden und verarbeitenden Bauteile im Luftleitungssystem. Ein Bereich 16, in dem eine Leckage nicht erkannt werden kann, umfasst lediglich die dynamischen Toleranzen der Messwerte aufnehmenden und verarbeitenden Bauteile, beispielsweise deren Alterung und deren Temperaturstreuung. Er kann je nach Auslegung auch die Alterung und Temperaturstreuung der Leitungsbauteile umfassen. Somit ist der Bereich 16, in dem eine Leckage nicht erkannt werden kann, wesentlich kleiner als bei einem System des Standes der Technik.

Es versteht sich, dass zwischen den Soll-Luftmassenstromwerten und/oder Soll-Druckwerten interpoliert werden kann. Das Interpolieren kann während des Lernbetriebes oder des Normalbetriebes durchgeführt werden. Hierzu sind verschiedene Techniken bekannt, beispielsweise eine Polynominterpolation oder eine Spilne-Interpolation und dergleichen, so dass diese Interpolationsverfahren keiner weiteren Erläuterung bedürfen.

Typischerweise ist der Lernbetrieb lediglich einmal nach der Montage des Luftfahrzeuges oder nach einem Austausch von Leitungsbauteilen des Luftleitungssystems, der Durchflusserfassungseinrichtung, des Temperatursensors oder der Druckerfassungseinrichtung erforderlich. Der Lernbetrieb kann auch bei einer Wartung wiederholt werden, um Alterungserscheinungen der Messwerte aufnehmenden und verarbeitenden Bauteile zu berücksichtigen und um den Bereich 16, in dem eine Leckage nicht erkannt werden kann, möglichst klein zu halten.

Während des Normalbetriebs, d.h. während des Fluges, werden der Normalbetrieb-Ist-Luftmassenstrom und der Normalbetrieb-Ist-Druck erfasst. Der dem Normalbetrieb-Ist-Druck zugeordnete Soll-Luftmassenstrom wird mit dem Normalbetrieb-Ist-Luftmassenstrom verglichen. Zusätzlich oder alternativ kann der dem Normalbetrieb-Ist-Luftmassenstrom zugeordnete Soll-Druck mit dem Normalbetrieb-Ist-Druck verglichen werden. Es wird ein Warnsignal ausgegeben, falls der Normalbetrieb-Ist-Luftmassenstrom vom jeweiligen Soll-Luftmassenstrom oder der Normalbetrieb-Ist-Druck vom jeweiligen Soll-Druck um mehr als einen Schwellenwert abweicht.

Während des Lernbetriebes weist die Steuerungseinrichtung dem Luftmassenstrom LM1 den statischen Druck DP1 zu. Der Luftmassenstrom LM1 wird als Soll-Luftmassenstrom und der statische Druck DP1 wird als Soll-Druck abgespeichert. Dieser Punkt der Kennlinie ist mit dem Bezugszeichen 18 gekennzeichnet. Während des Normalbetriebes werden der Luftmassenstrom LM1 und der statische Druck DP2 erfasst. Dieser Punkt ist mit dem Bezugszeichen 20 gekennzeichnet.

Dem Luftmassenstrom LM1 ist der Soll-Druck DP1 zugeordnet. Der Normalbetrieb-Ist-Druck beträgt jedoch DP2. Die Differenz aus DP1 und DP2 ist größer als ein vorbestimmter Schwellenwert. Somit zeigt die Steuerungseinrichtung 10 an, dass eine Leckage vorliegt.

Die vorliegende Erfindung hat den Vorteil, dass neben einer Leckage auch eine teilweise oder vollständige Verstopfung einer Leitung und/oder Düse oder eine Veränderung der Luftquelle erkannt werden können, da dies die Kennlinie des statischen Drucks über den Luftmassenstrom verändert. Ferner kann die vorliegende Erfindung statische Messfehler der verwendeten Messaufnehmer berücksichtigen. Die vorliegende Erfindung kann auch Einflüsse durch Biegungen in den Leitungen, Leitungsverzweigungen und dergleichen berücksichtigen. Der Bereich 16, in dem eine Störung im Luftleitungssystem nicht erkannt werden kann, ist beim erfindungsgemä-βen Luftfahrzeugleitungsüberwachungssystem wesentlich kleiner als beim Stand der Technik. Die vorliegende Erfindung schafft ein sichereres Luftfahrzeug, da die Enteisung des Flügels besser überwacht werden kann. Ferner kann das Eintreten von Heißluft in den Flügel und die damit einhergehende Gefahr von strukturellen Instabilitäten insbesondere bei der Verwendung von Verbundmaterialien im Flügel zuverlässiger als beim Stand der Technik erfasst werden. Ferner wird ein komfortableres Luftfahrzeug geschaffen, da die Funktion der Klimaanlage besser überwacht werden kann.

## Patentansprüche

1. Luftfahrzeugleitungsüberwachungssystem, mit
- einer Leitung (2, 3, 4), die Gas von einer Quelle (1) zu einem Einsatzort (5) leitet,
- einer Durchflusserfassungseinrichtung (7) zum Erfassen eines Gasmassenstroms In der Leitung (2),
- einer Druckerfassungseinrichtung (9) zum Erfassen eines statischen Drucks in der Leitung (2) und
- einer Steuerungseinrichtung (10), die dazu ausgebildet ist,
- in einem Lernbetrieb zumindest einen Lernbetrieb-Ist-Gasmassenstromwert zu erfassen und den Lernbetrieb-Ist-Gasmassenstromwert als Soll-Gasmassenstrom für einen Normalbetrieb abzuspeichern und einen Lernbetrieb-Ist-Druckwert zu erfassen und den Lernbetrieb-Ist-Druckwert als Soll-Druck für den Normalbetrieb abzuspeichern und
- im Normalbetrieb einen Normalbetrieb-Ist-Gasmassenstrom mit dem Soll-Gasmassenstrom zu vergleichen und/oder einen Normalbetrieb-Ist-Druck mit dem Soll-Druck zu vergleichen und, falls der Normalbetrieb-Ist-Gasmassenstrom um mehr als einen Schwellenwert vom Soll-Gasmassenstrom abweicht und/oder falls der Normalbetrieb-Ist-Druck um mehr als einen Schwellenwert vom Soll-Druck abweicht, ein Signal auszugeben, das eine Abweichung anzeigt,
**dadurch gekennzeichnet, dass** die Steuerungseinrichtung (10) ferner dazu ausgebildet ist, im Lernbetrieb eine Mehrzahl von Lernbetrieb-Ist-Gasmassenstromwerten bei jeweils unterschiedlichen Lernbetrieb-Ist-Drücken zu erfassen, jeden Lernbetrieb-Ist-Gasmassenstromwert einem korrespondierenden Lernbetrieb-Ist-Druckwert zuzuordnen und jeden Lernbetrieb-Ist-Gasmassenstromwert als Soll-Gasmassenstrom für einen Normalbetrieb, jeden Lernbetrieb-Ist-Druckwert als Soll-Druck für einen Normalbetrieb und eine Zuordnung zwischen dem jeweiligen Soll-Druck und dem jeweiligen Soll-Gasmassenstrom abzuspeichern

2. Luftfahrzeugleitungsüberwachungssystem nach Anspruch 1,
**dadurch gekennzeichnet, dass** die Steuerungseinrichtung (10) ferner dazu ausgebildet ist,
- im Normalbetrieb einen Normalbetrieb-Ist-Gasmassenstrom von der Durchflusserfassungseinrichtung (7) zu erhalten und einen Normalbetrieb-Ist-Druck von der Druckerfassungseinrichtung (9) zu erhalten, den dem Normalbetrieb-Ist-Druck zugeordneten Soll-Gasmassenstrom mit dem Normalbetrieb-Ist-Gasmassenstrom zu vergleichen und, falls der Normalbetrieb-Ist-Gasmassenstrom um mehr als einen Schwellenwert vom Soll-Gasmassenstrom abweicht, das Signal auszugeben, das eine Abweichung anzeigt, und/oder
- im Normalbetrieb einen Normalbetrieb-Ist-Gasmassenstrom von der Durchflusserfassungseinrichtung (7) zu erhalten und einen Normalbetrieb-Ist-Druck von der Druckerfassungseinrichtung (9) zu erhalten, den dem Normalbetrieb-Ist-Gasmassenstrom zugeordneten Soll-Druck mit dem Normalbetrieb-Ist-Druck zu vergleichen und, falls der Normalbetrieb-Ist-Druck um mehr als einen Schwellenwert vom Soll-Druck abweicht, das Signal auszugeben, das eine Abweichung anzeigt.

3. Luftfahrzeugleitungsüberwachungssystem nach Anspruch 1 oder 2,
**dadurch gekennzeichnet, dass** die Steuerungseinrichtung (10) dazu ausgebildet ist, zwischen zumindest zwei Soll-Druckwerten und/oder zumindest zwei Soll-Gasmassenstromwerten zu interpolieren.

4. Luftfahrzeugleitungsüberwachungssystem nach einem der Ansprüche 1 bis 3, **dadurch gekennzeichnet, dass** die Durchflusserfassungseinrichtung (7) eine Venturidüse umfasst und eine Differenz zwischen einem stromaufwärts der Venturidüse vorherrschenden Druck und einem stromabwärts der Venturidüse vorherrschenden Druck und die Temperatur des Gases ein Maß des Gasmassenstroms bereitstellt.

5. Luftfahrzeugleitungsüberwachungssystem nach einem der Ansprüche 1 bis 4, **dadurch gekennzeichnet, dass** die Durchflusserfassungseinrichtung (7) einen Gasvolumenstrom erfasst und die Steuerungseinrichtung (10) dazu eingerichtet ist, statt eines Gasmassenstromwerts einen Gasvolumenstromwert zu verarbeiten.

6. Luftfahrzeugflügelenteisungssystem mit einem Luftfahrzeugleitungsüberwachungssystem nach einem der Ansprüche 1 bis 5, wobei der Einsatzort, an den die Leitung (2, 3, 4) des Luftfahrzeugleitungsüberwachungssystems, das die Leitung (2, 3, 4) durchströmende Gas leitet, zumindest einen Gasaustritt (5) in einem Luftfahrzeugflügel umfasst.

7. Luftfahrzeugklimaanlage mit einem Luftfahrzeugleitungsüberwachungssystem nach einem der Ansprüche 1 bis 5.

8. Verfahren zum Überwachen eines Gasmassenstroms in einer in einem Luftfahrzeug einbaubaren Leitung (2, 3, 4), die Gas von einer Quelle (1) zu einem Einsatzort (5) leitet, bei dem in einem Lernbetrieb folgende Schritte ausgeführt werden:
- Bestimmen eines Lernbetrieb-Ist-Gasmassenstromwerts des in der Leitung (2, 3, 4) strömenden Gases,
- Bestimmen eines Lernbetrieb-Ist-Druckwerts eines statischen Drucks in der Leitung (2, 3, 4) und
- Abspeichern des Lernbetrieb-Ist-Gasmassenstromwerts als Soll-Gasmassenstrom und des Lernbetrieb-Ist-Druckwerts als Soll-Druck und
bei dem im Normalbetrieb folgende Schritte ausgeführt werden:
- Bestimmen eines Normalbetrieb-Ist-Gasmassenstroms in der Leitung (2, 3, 4),
- Bestimmen eines Normalbetrieb-Ist-Druckwerts des statischen Drucks in der Leitung (2, 3, 4),
- Vergleichen des Normalbetrieb-Ist-Gasmassenstroms mit dem Soll-Gasmassenstrom und/oder Vergleichen des Normalbetrieb-Ist-Druckwerts mit dem Soll-Druck und
- Ausgeben eines Warnsignals, falls der Normalbetrieb-Ist-Gasmassenstrom vom Soll-Gasmassenstrom um mehr als einen Schwellenwert abweicht und/oder der Normalbetrieb-Ist-Druck vom Soll-Druck um mehr als einen Schwellenwert abweicht, **dadurch gekennzeichnet, dass** im Lernbetrieb ferner folgende Schritte ausgeführt werden:
- Bestimmen einer Mehrzahl von Lernbetrieb-Ist-Gasmassenstromwerten bei jeweils unterschiedlichen Lembetrieb-Ist-Drücken,
- Zuordnen jedes Lernbetrieb-Ist-Gasmassenstromwerts zu dem jeweiligen Lernbetrieb-Ist-Druckwert und
- Abspeichern jedes Lernbetrieb-Ist-Gasmassenstromwerts als Soll-Gasmassenstrom für einen Normalbetrieb, jedes Lernbetrieb-Ist-Druckwerts als Soll-Druck für einen Normalbetrieb und einer Zuordnung zwischen dem jeweiligen Soll-Druck und dem jeweiligen Soll-Gasmassenstrom.

9. Verfahren nach Anspruch 8,
**dadurch gekennzeichnet, dass**
im Normalbetrieb ferner folgende Schritte ausgeführt werden:
- Erfassen des Normalbetrieb-Ist-Gasmassenstroms,
- Erfassen des Normalbetrieb-Ist-Drucks,
- Vergleichen des dem Normalbetrieb-Ist-Druck zugeordneten Soll-Gasmassenstroms mit dem Normalbetrieb-Ist-Gasmassenstrom und/oder Vergleichen des dem Normalbetrieb-Ist-Gasmassenstrom zugeordneten Soll-Drucks mit dem Normalbetrieb-Ist-Druck und
- Ausgeben eines Warnsignals, falls der Normalbetrieb-Ist-Gasmassenstrom vom jeweiligen Soll-Gasmassenstrom und/oder der Normalbetrieb-Ist-Druck vom jeweiligen Soll-Wert um mehr als einen Schwellenwert abweicht.

10. Verfahren nach Anspruch 8 oder 9,
**gekennzeichnet durch** den Schritt des Interpolierens zwischen zumindest zwei Soll-Druckwerten und/oder zumindest zwei Soll-Gasmassenstromwerten.

11. Verfahren nach einem der Ansprüche 8 bis 10,
**dadurch gekennzeichnet, dass** das statt eines Gasmassenstromwerts ein Gasvolumenstromwert erfasst und verarbeitet wird.

12. Verfahren zum Überwachung des Enteisens eines Lufitfahrzeugflügels mit den Schritten des Verfahrens nach einem der Ansprüche 8 bis 11, wobei der Einsatzort, an den die Leitung (2, 3, 4) das die Leitung (2, 3, 4) durchströmende Gas leitet, zumindest eine Gasaustrittsdüse im Luftfahrzeugflügel umfasst.

13. Verfahren zum Überwachen der Klimatisierung einer Luftfahrzeugkabine mit den Schritten des Verfahrens nach einem der Ansprüche 8 bis 11. 304251

## Claims

1. Aircraft conduit monitoring system comprising
- a conduit (2, 3, 4) that conducts gas from a source (1) to a point of application (5),
- a flow sensing device (7) for sensing a gas mass flow rate in the conduit (2),
- a pressure sensing device (9) for sensing a static pressure in the conduit (2) and
- a control device (10) which is configured
- to sense in a learning mode of operation at least one learning mode of operation actual gas mass flow rate value and to store the learning mode of operation actual gas mass flow rate value as a set gas mass flow rate for a normal mode of operation and to sense a learning mode of operation actual pressure value and to store the learning mode of operation actual pressure value as a set pressure for the normal mode of operation and
- to compare in the normal mode of operation a normal mode of operation actual gas mass flow rate with the set gas mass flow rate and/or to compare a normal mode of operation actual pressure with the set pressure, and if the normal mode of operation actual gas mass flow rate deviates by more than a threshold value from the set gas mass flow rate and/or if the normal mode of operation actual pressure deviates by more than a threshold value from the set pressure, to emit a signal which indicates a deviation,
**characterised in that** the control device (10) is further configured to sense in the learning mode of operation a plurality of learning mode of operation actual gas mass flow rate values at different learning mode of operation actual pressures, to assign each learning mode of operation actual gas mass flow rate value to a corresponding learning mode of operation actual pressure value, and to store each learning mode of operation actual gas mass flow rate value as a set gas mass flow rate for a normal mode of operation, each learning mode of operation actual pressure value as a set pressure for a normal mode of operation and an association between the respective set pressure and the respective set gas mass flow rate.

2. Aircraft conduit monitoring system according to Claim 1,
**characterised in that** the control device (10) is further configured
- to obtain in the normal mode of operation a normal mode of operation actual gas mass flow rate from the flow sensing device (7) and to obtain a normal mode of operation actual pressure from the pressure sensing device (9), to compare the set gas mass flow rate assigned to the normal mode of operation actual pressure with the normal mode of operation actual gas mass flow rate, and if the normal mode of operation actual gas mass flow rate deviates by more than a threshold value from the set gas mass flow rate, to emit the signal which indicates a deviation, and/or
- to obtain in the normal mode of operation a normal mode of operation actual gas mass flow rate from the flow sensing device (7), and to obtain a normal mode of operation actual pressure from the pressure sensing device (9), to compare the set pressure assigned to the normal mode of operation actual gas mass flow rate with the normal mode of operation actual pressure, and if the normal mode of operation actual pressure deviates by more than a threshold value from the set pressure, to emit the signal which indicates a deviation.

3. Aircraft conduit monitoring system according to Claim 1 or 2,
**characterised in that** the control device (10) is configured to interpolate between at least two set pressure values and/or at least two set gas mass flow rate values.

4. Aircraft conduit monitoring system according to one of Claims 1 to 3,
**characterised in that** the flow sensing device (7) comprises a venturi nozzle and provides a difference between a pressure prevailing upstream of the venturi nozzle and a pressure prevailing downstream of the venturi nozzle, where the temperature of the gas provides a measure of the gas mass flow rate.

5. Aircraft conduit monitoring system according to one of Claims 1 to 4,
**characterised in that** the flow sensing device (7) senses a gas volume flow rate and the control device (10) is designed to process a gas volume flow rate value instead of a gas mass flow rate value.

6. Aircraft wing de-icing system comprising an aircraft conduit monitoring system according to one of Claims 1 to 5, the point of application at which the conduit (2, 3, 4) of the aircraft conduit monitoring system conducts the gas flowing through the conduit (2, 3, 4) comprising at least one gas outlet (5) in an aircraft wing.

7. Aircraft air-conditioning unit comprising an aircraft conduit monitoring system according to one of Claims 1 to 5.

8. Method for monitoring a gas mass flow rate in a conduit (2, 3, 4) installable in an aircraft, which conducts gas from a source (1) to a point of application (5), wherein the following steps are carried out in a learning mode of operation:
- determining a learning mode of operation actual gas mass flow rate value of the gas flowing in the conduit (2, 3, 4),
- determining a learning mode of operation actual pressure value of a static pressure in the conduit (2, 3, 4) and
- storing the learning mode of operation actual gas mass flow rate value as a set gas mass flow rate and the learning mode of operation actual pressure value as a set pressure, and wherein
- in the normal mode of operation the following steps are carried out:
- determining a normal mode of operation actual gas mass flow rate in the conduit (2, 3, 4),
- determining a normal mode of operation actual pressure value of the static pressure in the conduit (2, 3, 4),
- comparing the normal mode of operation actual gas mass flow rate with the set gas mass flow rate and/or comparing the normal mode of operation actual pressure value with the set pressure and
- emitting a warning signal if the normal mode of operation actual gas mass flow rate deviates from the set gas mass flow rate by more than a threshold value and/or the normal mode of operation actual pressure deviates from the set pressure by more than a threshold value,
**characterised in that** in the learning mode of operation the following steps are also carried out:
- determining a plurality of learning mode actual gas mass flow rate values of operation at different learning mode of operation actual pressures,
- assigning each learning mode of operation actual gas mass flow rate value to the respective learning mode of operation actual pressure value and
- storing each learning mode of operation actual gas mass flow rate value as a set gas mass flow rate for a normal mode of operation, each learning mode of operation actual pressure value as a set pressure for a normal mode of operation and an association between the respective set pressure and the respective set gas mass flow rate.

9. Method according to Claim 8,
**characterised in that**
in the normal mode of operation the following steps are also carried out:
- sensing the normal mode of operation actual gas mass flow rate,
- sensing the normal mode of operation actual pressure,
- comparing the set gas mass flow rate assigned to the normal mode of operation actual pressure with the normal mode of operation actual gas mass flow rate and/or comparing the set pressure assigned to the normal mode of operation actual gas mass flow rate with the normal mode of operation actual pressure and
- emitting a warning signal if the normal mode of operation actual gas mass flow rate deviates from the respective set gas mass flow rate and/or the normal mode of operation actual pressure deviates from the respective set value by more than a threshold value.

10. Method according to Claim 8 or 9,
**characterised by** the step of interpolation between at least two desired pressure values and/or at least two desired gas mass flow rate values.

11. Method according to one of Claims 8 to 10, **characterised in that** a gas volume flow rate value is sensed and processed instead of a gas mass flow rate value.

12. Method for monitoring the de-icing of an aircraft wing comprising the steps of the method according to one of Claims 8 to 11, the point of application at which the conduit (2, 3, 4) conducts the gas flowing through the conduit (2, 3, 4) comprising at least one gas outlet nozzle in the aircraft wing.

13. Method for monitoring the air-conditioning of an aircraft cabin comprising the steps of the method according to one of Claims 8 to 11.

## Revendications

1. Système de surveillance d'un conduit d'aéronef comprenant
- un conduit (2, 3, 4) qui amène du gaz d'une source (1) jusqu'à un lieu d'utilisation (5),
- un dispositif de relevé de débit (7) pour relever un débit massique de gaz dans le conduit (2),
- un dispositif de relevé de pression (9) pour relever une pression statique dans le conduit (2), et
- un dispositif de commande (10) conçu pour
- au cours d'un fonctionnement en mode d'apprentissage, relever au moins une valeur instantanée de débit massique de gaz de fonctionnement en mode d'apprentissage et mémoriser la valeur instantanée de débit massique de gaz de fonctionnement en mode d'apprentissage en tant que débit massique de gaz de consigne pour un fonctionnement en mode normal, et pour relever une valeur instantanée de pression de fonctionnement en mode d'apprentissage et mémoriser la valeur instantanée de pression de fonctionnement en mode d'apprentissage en tant que pression de consigne pour le fonctionnement en mode normal, et
- lors du fonctionnement en mode normal, comparer un débit massique de gaz instantané de fonctionnement en mode normal avec le débit massique de gaz de consigne, et/ou une pression instantanée de fonctionnement en mode normal avec la pression de consigne, et, dans le cas où le débit massique de gaz instantané de fonctionnement en mode normal s'écarte de plus d'une valeur de seuil du débit massique de gaz de consigne, et/ou dans le cas où la pression instantanée de fonctionnement en mode normal s'écarte de plus d'une valeur de seuil de la pression de consigne, délivrer un signal qui indique un écart,
**caractérisé en ce que** le dispositif de commande (10) est par ailleurs conçu pour relever, lors du fonctionnement en mode d'apprentissage, une pluralité de valeurs instantanées de débit massique de gaz de fonctionnement en mode d'apprentissage pour des pressions instantanées de fonctionnement en mode d'apprentissage respectivement différentes, associer à chaque valeur instantanée de débit massique de gaz de fonctionnement en mode d'apprentissage une valeur instantanée de pression de fonctionnement en mode d'apprentissage correspondante, et mémoriser chaque valeur instantanée de débit massique de gaz de fonctionnement en mode d'apprentissage en tant que débit massique de gaz de consigne pour un fonctionnement en mode normal, chaque valeur instantanée de pression de fonctionnement en mode d'apprentissage en tant que pression de consigne pour un fonctionnement en mode normal, et une association entre la pression de consigne respective et le débit massique de gaz de consigne respectif.

2. Système de surveillance d'un conduit d'aéronef selon la revendication 1,
**caractérisé en ce que** le dispositif de commande (10) est par ailleurs conçu pour
- lors du fonctionnement en mode normal, obtenir un débit massique de gaz instantané de fonctionnement en mode normal à partir du dispositif de relevé de débit (7), et une pression instantanée de fonctionnement en mode normal à partir du dispositif de relevé de pression (9), comparer le débit massique de gaz de consigne associé à la pression instantanée de fonctionnement en mode normal avec le débit massique de gaz instantané de fonctionnement en mode normal, et, dans le cas où le débit massique de gaz instantané de fonctionnement en mode normal s'écarte de plus d'une valeur de seuil du débit massique de gaz de consigne, délivrer le signal qui indique un écart, et/ou
- lors du fonctionnement en mode normal, obtenir un débit massique de gaz instantané de fonctionnement en mode normal à partir du dispositif de relevé de débit (7), et une pression instantanée de fonctionnement en mode normal à partir du dispositif de relevé de pression (9), comparer la pression de consigne associée au débit massique de gaz instantané de fonctionnement en mode normal avec la pression instantanée de fonctionnement en mode normal, et, dans le cas où la pression instantanée de fonctionnement en mode normal s'écarte de plus d'une valeur de seuil de la pression de consigne, délivrer le signal qui indique un écart.

3. Système de surveillance d'un conduit d'aéronef selon la revendication 1 ou la revendication 2,
**caractérisé en ce que** le dispositif de commande (10) est conçu pour interpoler entre au moins deux valeurs de pression de consigne et/ou au moins deux valeurs de débit massique de gaz de consigne.

4. Système de surveillance d'un conduit d'aéronef selon l'une des revendications 1 à 3,
**caractérisé en ce que** le dispositif de relevé de débit (7) comprend un tube de Venturi, et fournit une différence entre une pression prédominante en amont du tube de Venturi et une pression prédominante en aval du tube de Venturi, et la température du gaz fournissant une mesure pour le débit massique de gaz.

5. Système de surveillance d'un conduit d'aéronef selon l'une des revendications 1 à 4,
**caractérisé en ce que** le dispositif de relevé de débit (7) relève un débit-volume de gaz, et **en ce que** le dispositif de commande (10) est conçu pour traiter, à la place d'une valeur de débit massique de gaz, une valeur de débit-volume de gaz.

6. Système de dégivrage d'aile d'aéronef comprenant un système de surveillance de conduit d'aéronef selon l'une des revendications 1 à 5, dans lequel le lieu d'utilisation, vers lequel le conduit (2, 3, 4) du système de surveillance de conduit d'aéronef amène le gaz qui s'écoule à travers le conduit (2, 3, 4), comprend au moins une sortie de gaz (5) dans une aile d'aéronef.

7. Installation de climatisation d'aéronef comprenant un système de surveillance de conduit d'aéronef selon l'une des revendications 1 à 5.

8. Procédé de surveillance d'un débit massique de gaz dans un conduit (2, 3, 4) pouvant être implanté dans un aéronef, qui dirige du gaz d'une source (1) vers un lieu d'utilisation (5), procédé selon lequel sont exécutés, au cours d'un fonctionnement en mode d'apprentissage, les étapes de procédé suivantes :
- détermination d'une valeur instantanée de débit massique de gaz de fonctionnement en mode d'apprentissage du gaz s'écoulant dans le conduit (2, 3, 4),
- détermination d'une valeur instantanée de pression de fonctionnement en mode d'apprentissage de la pression statique dans le conduit (2, 3, 4), et
- mémorisation de la valeur instantanée de débit massique de gaz de fonctionnement en mode d'apprentissage en tant que débit massique de gaz de consigne, et de la valeur instantanée de pression de fonctionnement en mode d'apprentissage en tant que pression de consigne, et
selon lequel sont exécutés, au cours du fonctionnement en mode normal, les étapes de procédé suivantes :
- détermination d'un débit massique de gaz instantané de fonctionnement en mode normal dans le conduit (2, 3, 4),
- détermination d'une valeur instantanée de pression de fonctionnement en mode normal de la pression statique dans le conduit (2, 3, 4),
- comparaison du débit massique de gaz instantané de fonctionnement en mode normal avec le débit massique de gaz de consigne, et/ou comparaison de la valeur instantanée de pression de fonctionnement en mode normal avec la pression de consigne, et
- délivrance d'un signal d'avertissement, dans le cas où le débit massique de gaz instantané de fonctionnement en mode normal s'écarte de plus d'une valeur de seuil du débit massique de gaz de consigne, et/ou dans le cas où la pression instantanée de fonctionnement en mode normal s'écarte de plus d'une valeur de seuil de la pression de consigne,
**caractérisé en ce que** lors du fonctionnement en mode d'apprentissage sont exécutés, par ailleurs, les étapes suivantes :
- détermination d'une pluralité de valeurs instantanées de débit massique de gaz de fonctionnement en mode d'apprentissage pour des pressions instantanées de fonctionnement en mode d'apprentissage respectivement différentes,
- association de chaque valeur instantanée de débit massique de gaz de fonctionnement en mode d'apprentissage à la valeur instantanée de pression de fonctionnement en mode d'apprentissage respective, et
- mémorisation de chaque valeur instantanée de débit massique de gaz de fonctionnement en mode d'apprentissage en tant que débit massique de gaz de consigne pour un fonctionnement en mode normal, de chaque valeur instantanée de pression de fonctionnement en mode d'apprentissage en tant que pression de consigne pour un fonctionnement en mode normal, et d'une association entre la pression de consigne respective et le débit massique de gaz de consigne respectif.

9. Procédé selon la revendication 8,
**caractérisé en ce que** lors du fonctionnement en mode normal, sont par ailleurs exécutés les étapes suivantes :
- relevé du débit massique de gaz instantané de fonctionnement en mode normal,
- relevé de la pression instantanée de fonctionnement en mode normal,
- comparaison du débit massique de gaz de consigne associé à la pression instantanée de fonctionnement en mode normal avec le débit massique de gaz instantané de fonctionnement en mode normal, et/ou comparaison de la pression de consigne associée au débit massique de gaz instantané de fonctionnement en mode normal avec la pression instantanée de fonctionnement en mode normal, et
- délivrance d'un signal d'avertissement, dans le cas où le débit massique de gaz instantané de fonctionnement en mode normal s'écarte de plus d'une valeur de seuil du débit massique de gaz de consigne respectif, et/ou la pression instantanée de fonctionnement en mode normal s'écarte de plus d'une valeur de seuil de la pression de consigne respective.

10. Procédé selon la revendication 8 ou la revendication 9,
**caractérisé par** l'étape de l'interpolation entre au moins deux valeurs de pression de consigne et/ou au moins deux valeurs de débit massique de gaz de consigne.

11. Procédé selon l'une des revendications 8 à 10,
**caractérisé en ce qu'**une valeur de débit-volume de gaz est relevée et traitée à la place d'une valeur de débit massique de gaz.

12. Procédé de surveillance du dégivrage d'une aile d'aéronef comprenant les étapes du procédé selon l'une des revendications 8 à 11, dans lequel le lieu d'utilisation, vers lequel le conduit (2, 3, 4) du système de surveillance de conduit d'aéronef amène le gaz qui s'écoule à travers le conduit (2, 3, 4), comprend au moins une buse de sortie de gaz dans l'aile d'aéronef.

13. Procédé de surveillance de la climatisation d'une cabine d'aéronef comprenant les étapes du procédé selon l'une des revendications 8 à 11.
